# EUROPÄISCHE PATENTSCHRIFT

(11) **EP 3 747 115 B1**
(45) Veröffentlichungstag und Bekanntmachung des Hinweises auf die Patenterteilung: **19.10.2022**
(21) Anmeldenummer: 19702423.5
(22) Anmeldetag: 30.01.2019
(51) Int. Cl.: H02K 1/00, B62D 5/00, H02K 49/06

(54) **LENKSYSTEM MIT RELUKTANZBREMSE**
STEERING SYSTEM HAVING A RELUCTANCE BRAKE
SYSTÈME DE DIRECTION À FREIN À RÉLUCTANCE

(30) Priorität: 01.02.2018 DE 102018102216
(43) Veröffentlichungstag der Anmeldung: 09.12.2020
(73) Patentinhaber: thyssenkrupp Presta AG, 9492 Eschen (LI); thyssenkrupp AG, 45143 Essen (DE)
(72) Erfinder: GALEHR, Robert, 9486 Schaanwald (LI); SCHACHT, Arne, 6800 Feldkirch (AT)
(74) Vertreter: thyssenkrupp Intellectual Property GmbH
(86) Internationale Anmeldenummer: PCT/EP2019/052159
(87) Internationale Veröffentlichungsnummer: WO 2019/149713

(56) Entgegenhaltungen:
- DE-A1-102004 050 014
- DE-B- 1 132 644
- GB-A- 191 503 910
- US-A- 6 148 967
- US-A1- 2007 023 244

## Beschreibung

Die vorliegende Erfindung betrifft ein Lenksystem mit den Merkmalen des Oberbegriffs des Anspruchs 1.

Elektromechanische Servolenkungen in Kraftfahrzeugen unterstützen die vom Fahrer aufgebrachte Lenkkraft. Die Lenkkraft, die der Fahrer über ein Lenkrad vorgibt, wird in einen Torsionsstab geleitet, der sich kraftabhängig verdreht. Dieses Drehmoment misst ein Sensor, der diese Information an ein elektronisches Steuergerät weiterreicht. Das wiederum gibt dem elektrischen Servomotor präzise Befehle, welches Zusatzdrehmoment in die Lenkung eingeleitet werden soll.

Bei Steer-by-Wire-Lenksystemen gibt es keine direkte mechanische Kopplung zwischen dem Lenkrad und dem Lenkgestänge und die Fahrzeugräder werden direkt mit Hilfe eines Servomotors bewegt. Der maximale Einschlagwinkel des Lenkrades ist daher nicht mehr über mechanische Anschläge im Lenkgetriebe definiert. Der maximale Lenkwinkeleinschlag der Räder ist in Steer-by-Wire-Systemen aber dennoch beschränkt. Dem Fahrer ist daher anzuzeigen, wann ein maximaler Lenkeinschlag erreicht wird. Im einfachsten Fall kann ein mechanischer Lenkanschlag verwendet werden, welcher den maximalen Einschlagwinkel des Lenkrades auf einen bestimmten Winkel (oder eine vordefinierte Umdrehungsanzahl) begrenzt.

Derartige Lenkanschläge sind beispielsweise aus den Schriften DE 10 2008 045 195 A1 und DE 10 2013 014 138 B3 bekannt. Beide Schriften offenbaren einen in einer Kulisse geführten Gleitstein, welcher bei Erreichen einer vorgegebenen Maximalbewegung in eine mechanische Blockierung einfährt.

Ein Nachteil solcher Systeme ist, dass eine variable Kopplung zwischen Einschlagwinkel des Lenkrades und dem entsprechenden Lenkwinkeleinschlag eines Rades nicht möglich ist. So ist es beispielsweise wünschenswert, dass ein bestimmter Einschlagwinkel bei langsamer Fahrt einen anderen Lenkwinkeleinschlag bewirkt als bei schneller Fahrt. Dies macht variable Endanschläge notwendig. Im Stand der Technik sind hierzu verschiede Lösungsansätze bekannt, darunter mechanisch variable Endanschläge wie beispielsweise in DE 10 2013 014 135 B3 und JP 2008285045 A.

Zudem ist aus der DE 10 2004 050 014 A1 ein elektromechanisches Lenksystem gemäß der Präambel des Anspruchs bekannt, welches einen mit der Lenksäule verbundener Reaktionsdrehmomentgenerator und eine elektromechansische Bremse für die Lenksule umfasst. Mittels des Reaktionsdrehmomentgenerators wird dabei in Reaktion auf einen Lenkbefehl ein Widerstandsdrehmoment erzeugt. Mit der elektromechansischen Bremse kann das Lenkrad für deine Drehbegrenzung blockiert werden. Zudem kann die Bremse bei Ausfall des Reaktionsdrehmomentgenerators das Widerstandsdrehmoment liefern.

Aus der US 2007/0023244 A1 ist zudem ein magnetisch steuerbarer, mechanisch wirkender Reibungsdämpfer bekannt, dessen Verwendung in dieser Druckschrift auch für ein Steer-by-wire Lenksystem als Feedback-Aktuator vorgeschlagen wird und der Endpositionen für eine Drehrichtung vorgeben kann.

Es ist Aufgabe der vorliegenden Erfindung, einen variablen Endanschlag für die Verwendung in einem Lenksystem anzugeben, der einfach aufgebaut ist. Diese Aufgabe wird durch ein Lenksystem mit den Merkmalen des Anspruchs 1 gelöst. Vorteilhafte Weiterbildungen der Erfindung können den Unteransprüchen entnommen werden.

Demnach ist ein Lenksystem für Kraftfahrzeuge umfassend einen auf die gelenkten Räder wirkenden, in Abhängigkeit eines Fahrerlenkwunsches elektronisch geregelten Lenksteller, der mittels eines Lenkgetriebes auf die gelenkten Räder wirkt, und eine Rückwirkungen auf eine mit dem Lenkrad verbundene Lenkwelle übertragende Aktuator-Einrichtung vorgesehen, wobei Lenksystem eine elektrisch aktivierbare Haltebremse umfasst, die zwei Stellungen einnehmen kann. Bei einem Überschreiten eines vordefinierten Verdrehwinkels der Lenkwelle gegenüber einem fest mit dem Fahrzeug verbundenen Gehäuse blockiert die Haltebremse in einer Haltestellung ein Verdrehen der Lenkwelle gegenüber dem Gehäuse, und in einer offenen Stellung gibt die Haltebremse eine Rotation der Lenkwelle gegenüber dem Gehäuse frei. Die Haltebremse kann somit Endanschläge für das Lenksystem bereitstellen. Diese Endanschläge sind vollkommen flexibel, da der vordefinierte Verdrehwinkel zum Beispiel geschwindigkeitsabhängig gewählt werden kann.

Die Aktuator-Einrichtung hat die Aufgabe, dem Fahrer eine Rückmeldung über die Situation des Lenksystems und sein Umfeld zu geben. Der Fahrer soll die Straße und den Zustand des Lenksystems gleichsam spüren. Eine Rückmeldung kann durch direkte mechanische Kopplung der Räder und des Lenkrads erfolgen. Vorzugsweise, erfolgt die Rückmeldung mithilfe eines elektrischen Feedback-Aktuators, welcher im Falle mechanischer Kopplung von Rädern und Lenkrad die Rückmeldung verstärken oder überlagern kann; und im Falle von Steer-by-wire-Systemen ohne mechanische Rückkopplung eine Rückmeldung simuliert. Vorzugsweise ist die Haltebremse eine Reluktanzbremse: Hierbei wird das Prinzip der Minimierung eines magnetischen Widerstandes ausgenutzt. Ein magnetisches System strebt dazu, seinen magnetischen Widerstand zu reduzieren und die Induktivität des Systems zu erhöhen. Eine Verkleinerung eines Luftspalts, über welchen ein magnetischer Fluss läuft, bewirkt eine Verringerung des magnetischen Widerstandes. Damit verbunden ist ein niedrigeres Energieniveau des Systems. Die Kraft, die den magnetischen Widerstand zu reduzieren versucht, wird Reluktanzkraft oder Maxwellsche Kraft genannt.

Die Reluktanzkraft wird zum Blockieren der Lenkwelle verwendet.

Bevorzugt ist die Haltebremse derart ausgebildet, dass bei Bestromung der Haltebremse, diese durch Minimierung eines magnetischen Widerstandes zwischen einem mit der Lenkwelle verbundenen ersten Element und einem mit dem Gehäuse verbundenen zweiten Element eine Haltestellung einnimmt. Das hat den Vorteil, das die Bremse im ausgeschalteten Zustand keine Reibung oder Rippel hat. Zudem blockiert die Bremse nicht durch Vereisen oder durch Späne.

Die Bestromung der Spulenkörper erfolgt einphasig. Dies bedeutet, dass alle Spulenkörper mit derselben Phase beaufschlagt werden. Dadurch kann ein Steuergerät zum Steuern der Spulenkörper sehr einfach aufgebaut sein, da es nur einen Ausgang zu den Spulenkörper benötigt.

Die Bestromung der Spulenkörper kann nicht regelbar ausgebildet sein. Es kann mit Vorteil ausreichend sein, die Steurung für den Strom nur an- oder abschaltbar darzustellen. Dies hat den Vorteil einer einfachen Ansteuerschaltung.

Die Haltekraft der Haltebremse ist bevorzugt regelbar, z. B. über Stromstärke und/oder Spannung. Dadurch lässt sich eine einstellbare Haltekraft realisieren. Diese kann im Einzelfall bewusst niedriger gewählt werden, als ein extern, z. B. über ein Lenkrad, eingetragenes Drehmoment. Dadurch kann ein Drehen mit Rippeln erreicht werden, das z. B. dem Fahrer eine falsche Drehrichtung anzeigen kann.

Die Haltebremse ist in besonders bevorzugter Weise so geregelt, dass ein weicher Lenkanschlag realisiert werden kann, so dass z. B. die von der Haltebremse aufgebrachte Kraft in der Nähe des vordefinierten maximalen Lenkwinkels langsam ansteigt und die maximale Haltekraft erst bei Erreichen des maximalen Lenkwinkels erreicht wird.

Strom- und/oder Spannung können in Abhängigkeit der Rotorposition gewählt sein.

Drehendes bzw. drehbares Element und stehendes Element weisen mindestens ein einander gegenüberliegendes Flächenpaar bzw. paarweise gegenüberliegende Flächen mit Profilierung (Profilierungspaar) auf. Die Profilierung ist auf beiden Flächen ausgeprägt. Die Profilierung ist vorzugsweise nur auf magnetisch aktiven Teilen angebracht. Die Profilierung ist bevorzugt komplementär ausgebildet. Die Haltebremse kann ein oder mehrere Flächenpaare mit Profilierung aufweisen. Dadurch kann eine größere aktive magnetische Fläche erreicht werden.

Die Profilierung ist bevorzugt als Verzahnung ausgeführt. Die Anzahl der Zähne jeder Fläche eines Flächenpaares ist bevorzugt gleich. Damit liegt bei Bestromung stets eine Vielzahl eindeutig definierter Vorzugspositionen mit minimialer Reluktanz vor. Das Verhältnis von Zahnanzahl einer Fläche zu der anderen Fläche eines Flächenpaares kann aber auch eine beliebige ganze Zahl sein. Dadurch lassen sich die Anzahl von Vorzugspositionen einfach anpassen.

Die Flächenpaare mit Profilierung verlaufen vorzugsweise senkrecht und/oder waagrecht und/oder schräg zu einer Drehachse der Haltebremse. Damit ist eine Anpassung an viele Bauraumsituationen möglich. Die Haltebremse ist vorzugsweise koaxial zur Lenkwelle angeordnet.

Die Haltebremse ist vorzugsweise zusammen mit der Akutator-Einrichtung in einem Gehäuse angeordnet und dadurch besonders platzsparend.

Die Haltebremse weist vorzugsweise nicht mehr als drei Spulenkörper auf, bevorzugt zwei Spulenkörper, besonders bevorzugt genau einen Spulenkörper. Eine geringe Anzahl von Spulenkörpern vermindert den Herstellungsaufwand.

Die Spule oder die Spulen können konzentrisch zur Rotationsachse der Haltebremse verlaufen (Ringspule). Dies ist vorteilhaft, weil Ringspulen vor dem Einsetzen in einen Läufer oder Ständer vorgewickelt werden können.

Die Spulen können jedoch auch als konzentrierte Wicklungen um je einen Statorfuß ausgeführt sein.

Die Haltebremse weist zwei Elemente auf, ein drehendes und ein stehendes Element. Bevorzugt weist eines dieser beiden Elemente keinen Spulenkörper auf. Dieses Element wird im Weiteren auch als spulenloses Element oder spulenloser Körper bezeichnet. Das andere Element weist zumindest einen Spulenkörper auf. Dieses Element wird im Folgenden auch als spulenversehenes Element bzw. Körper bezeichnet.

Das spulenversehene Element kann ein- oder mehrstückig ausgeführt sein. Das spulenlose Element kann ein- oder mehrstückig ausgeführt sein. Das spulenversehene Element kann ein- oder mehrstückig ausgeführt sein.

Das spulenlose Element kann permanent magnetisiert oder teilmagnetisiert sein. Es können auch nur einzelne Teile des mehrstückig ausgeführten spulenlosen Elements magnetisiert sein. Die Magnetisierungsrichtung des Magnetfelds kann je nach Spulenanordnung in einer Ebene senkrecht zur Rotationsachse der Haltebremse oder aber parallel zu dieser erfolgen.

Zusätzlich oder alternativ zu einer Magnetisierung kann die Haltebremse auch Permanentmagneten umfassen.

Eine permanente Magnetisierung erhöht die magnetische Flussdichte des Systems. Damit kann eine höhere Energiedichte, ergo eine höhere Haltekraft, realisiert werden.

Eine permanente Magnetisierung der Haltebremse führt auch im stromlosen Zustand zu Vorzugspositionen geringster Reluktanz. Die Haltebremse weist daher Rippel auf. Die Haltebremse kann einen Bestromungsalgorithmus zur Kompensation der Rippel aufweisen. In einer Ausführungsform weist die Haltebremse einen in Anlage mit der Lenkwelle stehenden Haltering, einen Innenring, der mittels der Halterings mit der Lenkwelle drehfest verbunden ist und einen Außenring auf, der den Innenring umfänglich umgibt und der mit dem Gehäuse verbunden ist. Die Haltebremse wirkt somit über den Haltering unmittelbar auf die Lenkwelle. Dabei weisen der Außenring oder der Innenring einen im Querschnitt U-förmigen Eisenring auf, der in einer Ringnut eine Spule aufgenommen hat, die bestrombar ist. Der jeweilige andere Ring ist vorzugsweise ein im Querschnitt rechteckiger Eisenring. Es weisen der Innenring auf der Außenfläche und der Außenring auf der Innenfläche eine Verzahnung, die komplementär ist. Die Verzahnung greift dabei nicht ineinander. Es befindet sich ein Luftspalt zwischen dem Innenring und Außenring.

In einer zweiten Ausführungsform weist die Haltebremse einen im Querschnitt U-förmigen Innenring mit außenumfänglicher und innenumfänglicher Verzahnung auf, wobei zwischen den Schenkeln des Innenringes eine bestrombare Spule in einer Ringnut aufgenommen ist. Zudem weist die Haltebremse einen im Querschnitt U-förmigen Außenring mit Verzahnung auf den Innenseiten beider Schenkel auf, so dass der Innenring zwischen den beiden Schenkeln des Außenringes aufgenommen ist und zwei Luftspalte zur Minimierung des magnetischen Widerstandes zur Verfügung stehen. Die zur Verfügung stehende Haltekraft der Haltebremse kann dadurch gegenüber der ersten Ausführungsform erhöht werden. In diesem Fall kann vorgesehen sein, dass der bestrombare Innenring mit dem Gehäuse verbunden ist, wobei der Außenring an der Lenkwelle befestigt ist, oder der bestrombare Innenring kann mit der Außenseite der Lenkwelle verbunden sein, wobei dann der Außenring an dem Gehäuse befestigt ist.

Die Ausführungsformen haben gemeinsam, dass sich die Schenkel der im Querschnitt U-förmigen Ringe bevorzugt in Richtung der Längsachse der Lenkwelle erstrecken und konzentrisch zu dieser angeordnet sind. Weiterhin ist es vorteilhaft, wenn allgemein der Innenring und der Außenring aus Eisen gebildet sind. Die Spule ist vorzugsweise mit einem Vergussmittel in der Ringnut befestigt. Sie wird bevorzugt mittels einer Steuereinheit nach Bedarf bestromt. Dabei ist es vorteilhaft, wenn diese Steuereinheit eine Einrichtung zur Entmagnetisierung der Haltebremse aufweist, die eine Vollbrückenschaltung umfasst.

Besonders vorteilhaft ist der Einsatz der oben beschriebenen Haltebremse in einem Steer-by-wire-Lenksystem. Hier kann in den Feedback-Aktuator mit Hilfe der Halteeinrichtung ein Lenkanschlag ausgebildet werden.

Neben der Anwendung in Lenksystemen kann die oben beschriebene Brems- und Halteeinrichtung auch in anderen Gebieten der Technik Anwendung finden. Insbesondere umfasst eine solche elektromagnetische Brems- und Halteeinrichtung einen Ständer und einen Läufer, die drehbeweglich zueinander gelagert sind. Ständer und Läufer weisen einander zugewandte Flächen auf, die durch eine Profilierung einen nicht-konstanten Luftspalt ausbilden. Entweder der Ständer oder der Läufer weisen dabei eine oder mehrere Spulen auf, wobei der entsprechend andere Körper ein spulenloser Körper ist. Alle Spulen werden einphasig bestromt. Die Spule oder die Spulen ist/sind dazu ausgebildet, bei Bestromung eine Relativbewegung zwischen Ständer und Läufer zu verzögern oder zu blockieren (Reluktanzbremse).

Damit kann ein variabler Endanschlag des Läufers gegenüber dem Ständer realisiert werden, der einfach aufgebaut ist.

Die elektromagnetische Brems- und Halteeinrichtung ist zwischen einer offenen Stellung und einer Haltestellung umschaltbar ist, die bei einem Überschreiten eines vordefinierten Verdrehwinkels der Läufers gegenüber dem Ständer ein Verdrehen in der Haltestellung blockieren und in der offenen Stellung eine Rotation zwischen dem Läufer und dem Ständer freigeben.

Die Brems- und Halteeinrichtung weist vorzugsweise nur bei Bestromung eine Vielzahl von über dem Umfang verteilten Vorzugspositionen minimaler Reluktanz auf.

Die elektromagnetische Brems- und Halteeinrichtung kann eine Vielzahl von Flächenpaaren mit Profilierung aufweisen. Die Flächenpaare können waagrecht und/oder senkrecht und/oder schräg zur Drehachse des Läufers angeordnet sein.

Bevorzugt weist die elektromagnetische Brems- und Halteeinrichtung genau eine einzige Spule auf. Diese ist bevorzugt konzentrisch um die Drehachse des Läufers befindlich.

Die Haltebremse kann modular aufgebaut bzw. verwendet werden. Dadurch lässt sich eine gewünschte Haltekraft durch die mehrfache Verwendung von Gleichteilen einfach realisieren.

Bevorzugte Ausführungsformen der Erfindung werden nachfolgend anhand der Zeichnungen näher erläutert. Für gleiche oder funktions-gleiche Elemente werden in allen Zeichnungen die gleichen Bezugszeichen verwendet. Es zeigen:
- Fig. 1:: eine schematische Darstellung einer Steer-by-Wire Lenkung,
- Fig. 2:: einen schematischen Aufbau einer Reluktanzbremse mit stromerregtem Stator,
- Fig. 3, 4:: einen Längsschnitt und einen Querschnitt einer Reluktanzbremse in Haltestellung,
- Fig. 5:: einen Querschnitt durch die in Figur 3 gezeigte Reluktanzbremse in einer offenen Stellung,
- Fig. 6:: einen schematischen Aufbau einer Reluktanzbremse mit stromerregtem Rotor,
- Fig. 7:: einen Längschnitt einer Reluktanzbremse, die als Doppelläufer ausgebildet ist,
- Fig.8:: einen Querschnitt durch die Reluktanzbremse der Figur 7 in Haltestellung,
- Fig. 9:: einen Querschnitt durch die Reluktanzbremse der Figur 7 in einer offenen Stellung,
- Fig. 10:: einen schematischen Aufbau einer lenkradseitigen Reluktanzbremse mit stromerregtem Innenring als Stator,
- Fig. 11:: einen schematischen Aufbau einer lenkradseitigen Reluktanzbremse mit stromerregtem Innenring als Rotor,
- Fig. 12:: einen schematischen Aufbau einer lenkradfernen Reluktanzbremse mit stromerregtem Innenring als Stator, sowie
- Fig. 13:: einen schematischen Aufbau einer lenkradfernen Reluktanzbremse mit stromerregtem Innenring als Rotor,
- Fig. 14a-d:: verschiedene Zahnformen,
- Fig. 15a-c:: Querschnitte durch verschiedene Ausführungsformen einer Reluktanzbremse mit U-förmigem Spulenträger,
- Fig. 16a-b:: Querschnitte durch verschiedene Ausführungsformen einer Reluktanzbremse mit Lamellen,
- Fig. 17 a-c:: Querschnitte durch verschiedene Ausführungsformen einer Reluktanzbremse mit schiefen Bauteilen,
- Fig. 18:: einen Querschnitt durch eine weitere Ausführungsform einer Reluktanzbremse.

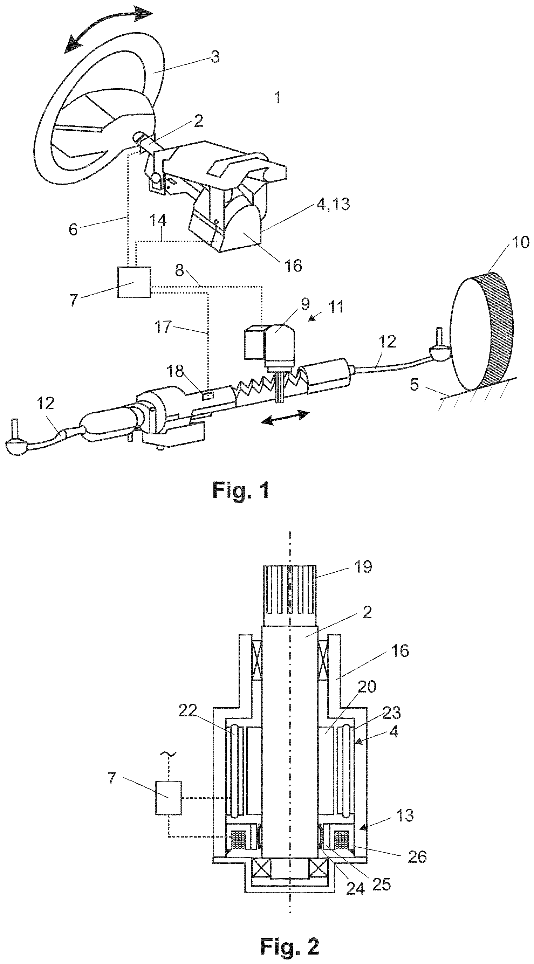

In der Figur 1 ist ein Steer-by-Wire-Lenksystem 1 gezeigt. An einer Lenkwelle 2 ist ein nicht dargestellter Drehwinkelsensor angebracht, welcher das durch Drehen eines Lenkeingabemittels 3, welches im Beispiel als Lenkrad ausgebildet ist, aufgebrachten Fahrerlenkwinkel erfasst. Es kann aber zusätzlich oder alternativ auch ein Lenkmoment erfasst werden. Des Weiteren ist an der Lenkwelle 2 ein Feedback-Aktuator 4 angebracht, welcher dazu dient, die Rückwirkungen von der Fahrbahn 5 auf das Lenkrad 3 zu simulieren und somit dem Fahrer eine Rückmeldung über das Lenk- und Fahrverhalten des Fahrzeugs zu geben. Der Fahrerlenkwunsch wird über den vom Drehwinkelsensor gemessenen Drehwinkel α der Lenkwelle 2 über Signalleitungen 6 an eine Steuereinheit 7 übertragen. Die Steuereinheit 7 überträgt den Fahrerlenkwunsch über eine Signalleitung 8 an einen elektrischen Lenksteller 9, welcher die Stellung der gelenkten Räder 10 steuert. Der Lenksteller 9 wirkt über ein Lenkstangen-Lenkgetriebe 11, wie beispielsweise einem Zahnstangen-Lenkgetriebe, sowie über Spurstangen 12 und anderen Bauteilen mittelbar auf die gelenkten Räder 10. Die Steuereinheit 7 übernimmt bevorzugt auch die Ansteuerung des Feedback-Aktuators 4 und die Ansteuerung einer Haltebremse 13 über eine Signalleitung 14. Die Haltebremse 13 ist dazu ausgebildet, beim Überschreiten eines vordefinierten Verdrehwinkels der Lenkwelle 2 ein Verdrehen der Lenkwelle 2 zu blockieren, d. h. sie bringt die notwendige Haltekraft auf, um eine Rotation der Lenkwelle 2 zu verhindern. Die Haltebremse 13 ist bevorzugt integral mit dem Feedback-Aktuator 4 in einem gemeinsamen Gehäuse 16 ausgebildet. Die Steuereinheit 7 empfängt weiterhin über eine Signalleitung 17 Signale von Sensoren 18 aus dem Lenkgetriebe 11.

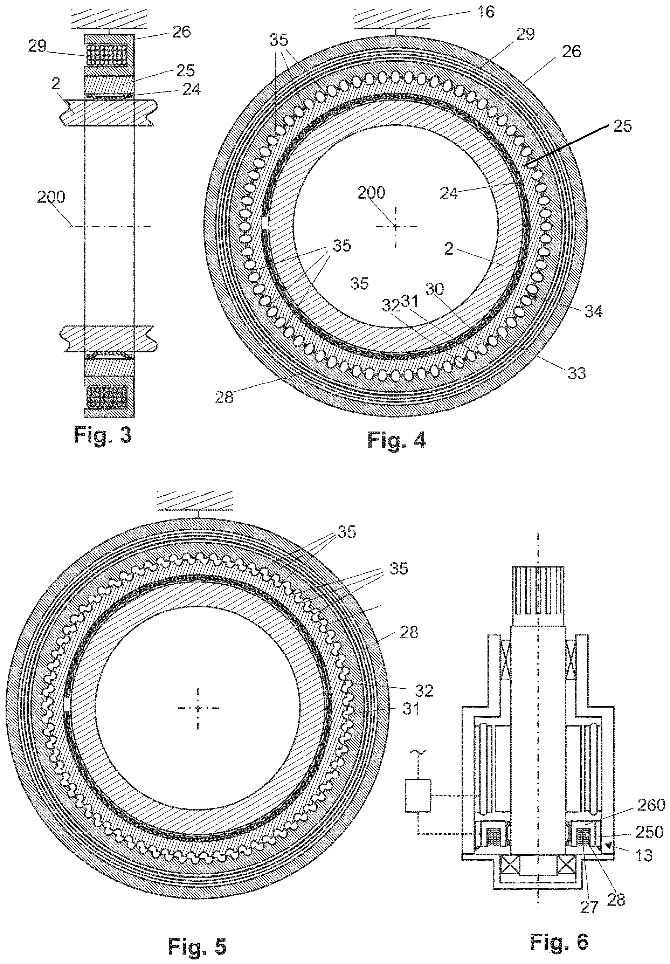

In den Figuren 2 und 3 sind Ausführungsformen der Haltebremse 13 dargestellt. Die Lenkwelle 2 weist an einem Ende eine Aufnahme 19 zur Befestigung der Lenkwelle 2 an dem nicht dargestellten Lenkrad auf. Die Lenkwelle 2 ist am lenkradnahen Ende und am lenkradfernen Ende in dem Gehäuse 16 drehbar gelagert. Das Gehäuse 16 umgibt den Feedback-Aktuator 4 und die Haltebremse 13. Der Feedback-Aktuator 4 weist einen mit der Lenkwelle 2 drehfest verbunden Rotor 20 und einen den Rotor 20 umgebenden Stator 21 auf, die Teil eines Servomotors sind. Der Stator 21 hat eine sich im Längsschnitt längs der Lenkwelle 2 erstreckende Statornut 22 in der die elektrischen Wicklungen 23 eingelegt sind. Die Steuereinheit 7 ist mit dem Feedback-Aktuator 4 verbunden und steuert die Bestromung der Wicklungen 23 an. Die Haltebremse 13 ist auf der lenkradfernen Seite des Feedback-Aktuators 4 angeordnet. Sie umgibt die Lenkwelle 2 konzentrisch. Die Haltebremse 13 weist einen in Anlage mit der Lenkwelle 2 stehenden Haltering 24 auf, der die Lenkwelle 2 mit einem Innenring 25 drehfest verbindet. Der Innenring 25 wird von einem Außenring 26 umgeben, der mit dem Gehäuse 16 verbunden ist. Die Haltebremse 13 arbeitet nach dem Reluktanzprinzip. Die Funktionsweise der Haltebremse 13 ergibt sich aus der Minimierung des magnetischen Widerstandes, auch Reluktanz genannt. Der in der Ausführungsform der Figuren 2 bis 5 dargestellte Außenring 26 weist einen im Querschnitt U-förmigen Eisenring auf, der in einer Ringnut 27 eine Spule 28 aufgenommen hat. Die Schenkel des Außenringes 26 erstrecken sich dabei in Richtung der Längsachse 200 der Lenkwelle 2 und sind konzentrisch zu dieser angeordnet. Die Spule 28 ist vorzugsweise mit einem Vergussmittel in der Ringnut 27 befestigt. Die Windungen 29 der Spule 28 verlaufen in Umfangsrichtung um die Längsachse 200 der Lenkwelle 2. Die Windungen 29 sind bevorzugt aus Kupferdraht gebildet. Der Außenring 26 ist mit der Steuereinheit 7 verbunden und kann über diese bestromt werden. Der Innenring 25 ist ebenfalls ein Eisenring. Der Innenring 25 weist auf der Außenfläche 30 eine Profilierung 31 auf und der Außenring 26 weist an seiner Innenfläche 33 eine Profilierung 32 auf. Im Beispiel ist das Flächenpaar mit Profilierung derart ausgestaltet, dass die Proflierungen 31 und 32 zueinander korrespondierend ausgestaltet sind. Zwischen dem Außen- und dem Innenring 26,25 ist ein Luftspalt 34 vorgesehen, so dass der Innenring 25 mit der Lenkwelle 2 rotieren kann, während der Außenring 26 an dem Gehäuse 16 ortsfest gehalten ist. Der technisch notwendige Luftspalt 34 ist möglichst klein dimensioniert. Die Profilierung 31,32 umfasst bevorzugt gleichmäßig entlang des Umfanges des Innen-und Außenringes 25,26 beabstandete Zähne 35, die sich parallel zur Längsachse 200 der Lenkwelle 2 erstrecken. Bei Bestromung der Spule 28 entstehen zwischen Innenring 25 und Außenring 26 geschlossene Pfade eines magnetischen Flusses. Die Funktionsweise der Haltebremse 13 ergibt sich aus der Minimierung des magnetischen Widerstandes, auch Reluktanz genannt. Die Reluktanzkraft entsteht an der Oberfläche zweier Materialien mit unterschiedlicher Permeabilität (z. B. Eisen und Luft). Die resultierende Reluktanzkraft wirkt so, dass sie den Reluktanzunterschied verkleinern will. Bei Bestromung der Spule 28 dreht sich somit der Innenring 25 in dem Außenring 26 bis die Reluktanz minimal ist. Wobei entlang der Pfade der magnetische Widerstand dann am geringsten ist, wenn der Luftspalt 34 zwischen dem Innenring 25 und dem Außenring 26 minimal ist. Wie in Figur 5 dargestellt, ist die Reluktanz minimal, wenn sich die Zähne 35 des Innenringes 25 und des Außenringes 26 gegenüber stehen. Die Haltekraft ist bei minimaler Reluktanz so groß, dass die Rotation der Lenkwelle 2 gesperrt ist. In der Figur 4 ist die Haltestellung der Haltebremse 13 dargestellt.

Die Steuereinheit 7 weist ebenfalls eine Einrichtung zur Entmagnetisierung der Reluktanzbremse 13 auf. Vorzugsweise ist in der Steuereinheit 7 dafür eine Vollbrückenschaltung vorgesehen. Durch Entmagnetisierung wird der magnetische Fluss zwischen Innenring 25 und Außenring 26 unterbrochen. Damit ist die Bremswirkung der Haltebremse 13 aufgehoben und der Innenring 25 kann frei mit der Lenkwelle 2 rotieren. Figur 5 zeigt einen geöffneten Zustand der Haltebremse 13.

Die in Figur 6 dargestellte Haltebremse 13 entspricht vom Prinzip her der zuvor beschriebenen Ausführungsform. Der Unterschied besteht darin, dass der Innenring 250 der Haltebremse 13 ein im Querschnitt U-förmiger Eisenring ist, der in einer Ringnut 27 eine Spule 28 aufgenommen hat. Bestromt wird in diesem Fall der mit der Lenkwelle drehfest verbundene Innenring 250 der Haltebremse 13 und nicht der Außenring 260, der ein im Querschnitt rechteckiger Eisenring ist.

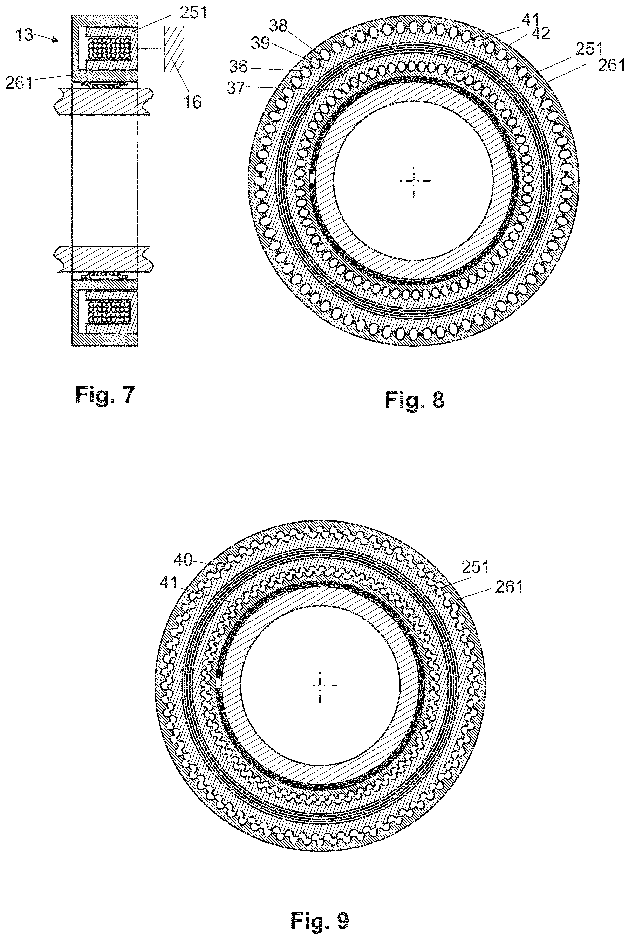

Zur Vergrößerung der Haltekraft kann die Haltebremse 13 einen mit dem Gehäuse 16 verbundenen Innenring 251 mit außenumfänglicher und innenumfänglicher Verzahnung 36,37 und einen dazu komplementären Außenring 261 in U-Form mit Verzahnung 38,39 auf den Innenseiten beider Schenkel aufweisen. Diese Ausführung mit zwei Luftspalten 40,41 zwischen dem Innenring 251 und dem Außenring 261 ist in den Figuren 7 bis 13 dargestellt. Sie wird auch "Doppelläufer" genannt.

In den Figuren 7 bis 9 weist der Innenring 251 einen Eisenring mit Spule auf. Eine Bestromung des Innenringes 251 führt zur Minimierung des magnetischen Widerstandes zwischen Innenring 251 und Außenring 261. Der Außenring 261 deckt den Innenring 251 auf der ringnutnahen Seite ab. Der Innenring 251 ist somit vollständig in dem Außenring 261 aufgenommen. Jeweils zwischen einem Schenkel des Innenringes 251 und einem Schenkel des Außenringes 261 bildet sich ein Luftspalt 40,41 aus. Die Profilierung bzw. Verzahnung der beiden Ringe 251,261 ist derart ausgebildet, dass die Zahnstellung der Zahnpaare des ersten Luftspaltes 40 und die Zahnstellung der Zahnpaare des zweiten Luftspaltes 41 synchron stehen, d. h. wenn sich die Zahnpaare des ersten Luftspaltes 40 gegenüberstehen, stehen sich gleichzeitig auch die Zahnpaare des zweiten Luftspaltes 41 gegenüber. In der Figur 8 ist die Haltebremse 13 in Haltestellung dargestellt. Figur 9 zeigt eine offene Stellung der Haltebremse 13.

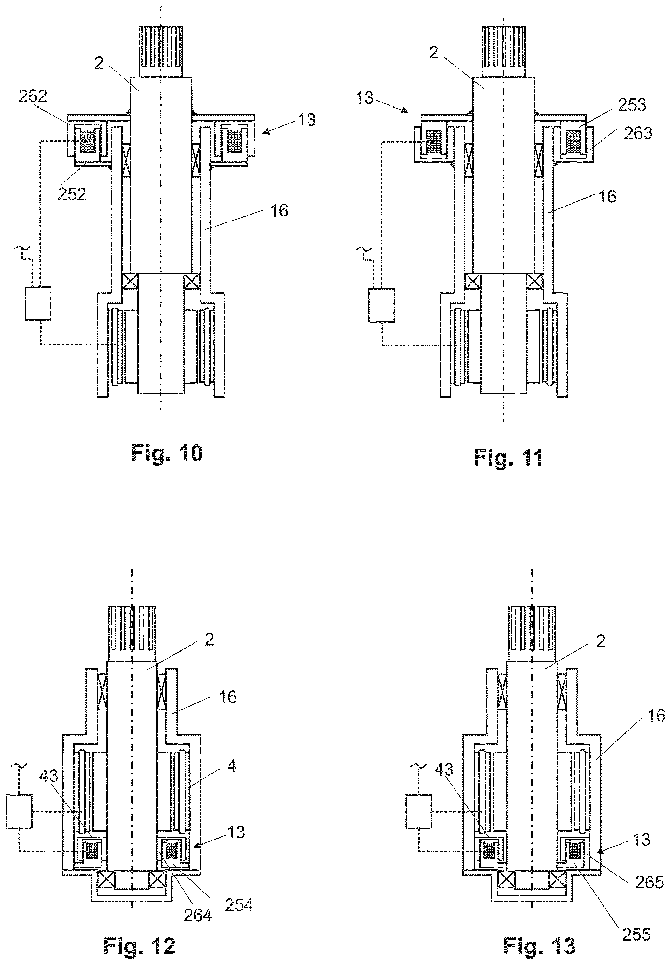

Die Figuren 10 und 11 zeigen zwei Ausführungsformen einer Haltebremse 13 mit Doppelläufer, wobei die Haltebremse 13 am lenkradseitigen Ende der Lenkwelle 2 angeordnet ist. In der Figur 10 ist der Außenring 262 an Lenkwelle 2 befestigt. Der bestrombare Innenring 252 ist mit dem Gehäuse 16 verbunden. In der Figur 11 ist hingegen der bestrombare Innenring 253 mit der Außenseite der Lenkwelle 2 verbunden und der Außenring 263 ist an dem Gehäuse 16 befestigt.

In den Figuren 12 und 13 sind zwei Ausführungsformen einer Haltebremse 13 mit Doppelläufer dargestellt, wobei die Haltebremse 13 am lenkradfernen Ende der Lenkwelle 2 angeordnet ist. Der bestrombare Innenring 254 ist in der Figur 12 mit dem Gehäuse 16 verbunden und der Außenring 264 ist an der Lenkwelle 2 befestigt. Hingegen ist in Figur 13 der bestrombare Innenring 255 mit der Außenseite der Lenkwelle 2 und der Außenring 265 mit dem Gehäuse 16 verbunden. Da die Haltebremse in beiden Fällen in unmittelbarer Nähe zum Feedback-Aktuator 4 angeordnet sind, zeigt der Außenring 264,265 mit seiner offen Seite von dem Feedback-Aktuator 4 weg. Der Innenring 254,255 liegt somit auf der feedback-aktuator-fernen Seite in dem Außenring 264,265. Die Rückwand 43 des Außenringes 264,265 schützt in diesem Fall die Haltebremse 13 vor elektromagnetischen Feldern, die vom Feedback-Aktuator 4 erzeugt werden.

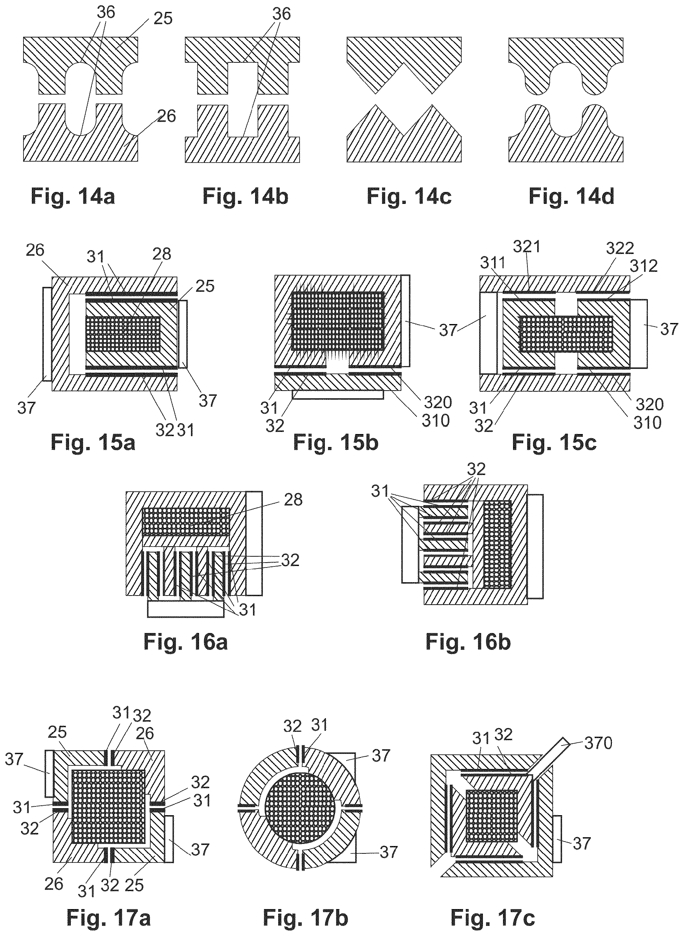

Figuren 14a-d zeigen verschiede Zahnformen für die Verwendung in einer Reluktanzbremse. In Figuren 14a,b ist andeutungsweise eine Flachverzahnung eines Innen- und eines Außenrings 25 bzw. 26 zu sehen, wobei in Figur 14a der Zahngrund 36 rund, in Figur 15b hingegen flach ausgebildet ist. In Figur 14c ist eine Spitzverzahnung abgebildet. In Figur 14d eine Wellenverzahnung.

Die Figuren 15a-17c zeigen verschiedene Ausführungsformen von Reluktanzbremsen im Querschnitt, wobei auf eine vollständige Darstellung verzichtet wurde. Entsprechend ist stets nur eine Hälfte eines vollständigen Querschnitts zu sehen.

In Figur 15a ist eine U-in-U-Form dargestellt, wie sie bereits weiter oben bei den Ausführungen zum "Doppelläufer" beschrieben wurde. Die Reluktanzbremse weist einen stehenden und einen rotierenden Teil 26, 25 auf, wobei einer dieser Teile eine bestrombare Spule 28 umfasst. Die Rolle der Teile als stehend oder rotierend ist grundsätzlich austauschbar. Die nicht eingezeichnete Drehachse befindet sich in der Horizontalen des Zeichnungsebene, unterhalb oder auch oberhalb der dargestellten Querschnittshälfte, also parallel zu den Schenkeln der u-förmigen Teile. Die Teile weisen auf ausgewählten einander zugewandten Seiten eine Profilierung 31,32 (Flächenpaar mit Profilierung) mit dazwischen liegendem Luftspalt auf. Die Befestigung der Teile an z. B. einer Lenkwelle oder einem Gehäuse ist hier über Halteteile 37 angedeutet. Die Halteteile sind hier jeweils außen an den U-förmigen Teile 25,26 angebracht. Eine andere Position der Halteteile ist denkbar. Die Halteteile sind bevorzugt aus nicht-magnetischem Material; die Teile 25, 26 hingegen schon.

Die für Fig. 15a gemachten Ausführungen gelten im Grundsatz auch für die nachfolgenden Erläuterungen zu Zeichnungen 15b-17c, so dass nachfolgend nur auf die wichtigsten Unterschiede eingegangen wird.

Figur 15b ist eine erweiterte U-in-I-Form, bei welcher ein Teil U-förmig, der andere Teil I-förmig ausgebildet ist. Die die U-Form hervorrufende Nut ist an ihrer Öffnung größtenteils verschlossen. Damit liegen zwei unterschiedliche Profilierungspaare 31,32 und 310,320 vor, die gleich oder unterschiedlich ausgeprägt sein können.

Figur 15c zeigt eine Doppel-C-in-Doppel-I-Form, die im Unterschied zu Figur 15b, ein drittes und viertes Profilierungspaar 311,321 und 312,322 aufweist.

Figur 16a zeigt eine Variante, in welcher die Profilierungspaare 31,32 lamellenartig ausgebildet sind. Die Profilierungspaare sind senkrecht zur Drehachse der Reluktanzbremse ausgebildet. Fig. 16b zeigt eine Variante, bei der die Profilierungspaare 31,32 sich im Unterschied zu Fig. 16a nicht senkrecht, sondern parallel zur Drehachse erstrecken.

Figuren 17a-c zeigen Varianten mit gegenüber der Drehachse diagonal geteiltem stehenden und/oder drehenden Teil. Dies erzeugt Profilierungspaare in wenigstens zwei Ebenen, hier parallel und senkrecht zur Drehachse. Eine andere Lage, etwa Schrägstellung der Profilierungspaare gegenüber der Drehachse ist möglich. Figur 17a zeigt eine Doppel-L-in-Doppel-L-Variante. Figur 17b eine Variante in runder Ausführung. Figur 16c zeigt eine Doppel-L-in-Doppel-L-Form, bei der der innenliegende Teil über ein nach außen durch das äußenliegende Teil 370 hindurchgeführtes Halteteil gehalten wird.

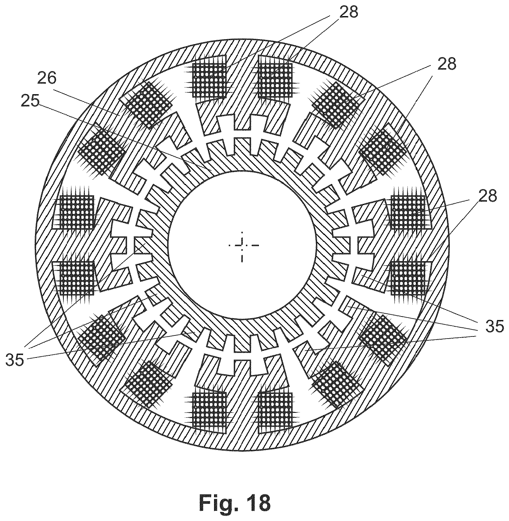

Figur 18 zeigt eine dem Schrittmotor verwandte Reluktanzbremse mit übereinstimmender Zähnezahl von Zähnen 35 von drehendem und stehendem Teil 25, 26. Wie bei Schrittmotoren weist der stehende Teil eine Vielzahl von bestrombaren Spulenkörpern 28 auf. Im Unterschied zu den bisherigen Ausführungsformen weist diese Ausführungsform durch die Vielzahl von Spulen konkrete Magnetpole im Teil 26 auf. Es existieren keine aktiven Pole im Teil 25. Alle Spulenkörper werden bei Aktivierung mit demselben Strom, d. h. einphasig, bestromt.

Die Funktionsweise ergibt sich analog der Funktion von Schrittmotoren und Reluktanzbremse. Mit dieser Ausführung ist jedoch aufgrund gleicher Zähnezahl- im Unterschied zu Schrittmotoren - keine aktive Drehung zwischen drehenden und stehendem Teil möglich. Sie wirkt als reine Haltebremse.

Es kann bei allen Ausführungsformen vorgesehen sein, die Wicklung der Haltebremse redundant auszuführen.

Die Anzahl und die Form der Zähne des Innen- und Außenringes können unterschiedlich sein.

Bei der Doppelläufer-Variante sind die Zahnstellungen bevorzugt asynchron, d. h. wenn sich die Zahnpaare des ersten Luftspaltes überdecken, überdecken sich die Zahnpaare des zweiten Luftspaltes nicht bzw. nur leicht. Dies erhöht die Anzahl möglicher Rastpositionen ohne Erhöhung der Zahnanzahl.

Die Haltebremse kann allgemein innerhalb oder außerhalb des Gehäuses angebracht sein.

Die Zahnform ist nicht auf die dargestellte Formen beschränkt. Sie kann eine Wellenform haben, spitz oder flach sein, eine Mischform dieser Arten oder eine andere Sonderform aufweisen.

Stehender und drehender Teil sind bevorzugt pulvermetallurgisch gefertigt. Sie bestehen z. B. aus nicht isolierten pulvermetallurgischen Werkstoffen, etwa pulvermetallurgisch magnetischen Werkstoffen, pulvermetallurgisch weichmagnetische Werkstoffen, gesinterten magnetischen Werkstoffen, gesinterten weichmagnetischen Werkstoffen. Sie können aber auch aus voll oder teilweise isoliertem pulvermetallurgischen Werkstoffen bestehen, wie z. B. nichtgesinterte weichmagnetische Werkstoffe (z. B. glasig kristallinen Multifunktionswerkstoffen (GKM) oder soft magnetic composites (SMC)) oder Spritzgusskunststoff mit hohem Anteil von magnetischem Pulver.

Die nichtmagnetisierten Teile, z. B. Halteteile oder Verbinder bestehend z. B. aus Kupfer, Aluminium oder einem Polymerwerkstoff.

Das Spulenmaterial kann bevorzugt Aluminium oder Kupfer sein.

## Patentansprüche

1. Lenksystem (1) für Kraftfahrzeuge umfassend einen auf die gelenkten Räder (10) wirkenden, in Abhängigkeit eines Fahrerlenkwunsches elektronisch geregelten Lenksteller (9), der mittels eines Lenkgetriebes (11) auf die gelenkten Räder (10) wirkt, eine Rückwirkungen auf eine mit dem Lenkrad (3) verbundene Lenkwelle (2) übertragende Aktuator-Einrichtung und eine elektrisch aktivierbare Haltebremse (13), **dadurch gekennzeichnet, dass** die Haltebremse (13) zwischen einer offenen Stellung und einer Haltestellung umschaltbar ist, wobei die Haltebremse (13) dazu ausgebildet ist, bei einem Überschreiten eines vordefinierten Verdrehwinkels der Lenkwelle (2) gegenüber eines mit dem Kraftfahrzeug gekoppelten Gehäuses ein Verdrehen der Lenkwelle (2) in der Haltestellung zu blockieren und in der offenen Stellung eine Rotation der Lenkwelle (2) gegenüber dem Gehäuse freizugeben, wobei die Haltebremse (13) eine Reluktanzbremse ist.

2. Lenksystem (1) nach Anspruch 1, **dadurch gekennzeichnet, dass** die Haltebremse (13) derart ausgebildet ist, dass bei Bestromung der Haltebremse (13), diese durch Minimierung eines magnetischen Widerstandes zwischen einem drehbar mit der Lenkwelle (2) verbundenen ersten Element (263,25,26) und einem fest mit einem Gehäuse verbundenen zweiten Element (253,25,26) eine Haltestellung einnimmt.

3. Lenksystem (1) nach Anspruch 1 oder Anspruch 2, **dadurch gekennzeichnet, dass** die Haltebremse (13) eine oder mehrere Spulen (28) umfasst, die einphasig bestromt wird/werden.

4. Lenksystem (1) nach Anspruch 3, **dadurch gekennzeichnet, dass** die Bestromung der Spule(n) (28) regelbar ist.

5. Lenksystem (1) nach einem der vorhergehenden Ansprüche, **dadurch gekennzeichnet, dass** die Haltebremse (13) genau eine oder eine Vielzahl von Flächenpaaren mit Profilierung (31,32 - 310,320 - 311,321 312,322) aufweist.

6. Lenksystem (1) nach Anspruch 5, **dadurch gekennzeichnet, dass** sich das oder die Flächenpaare mit Profilierung (31,32 - 310,320 - 311,321 312,322) waagrecht und/oder senkrecht und/oder schräg zur Drehachse (200) der Haltebremse (13) erstrecken.

7. Lenksystem (1) nach einem der vorhergehenden Ansprüche, **dadurch gekennzeichnet, dass** die Haltebremse (13) und ein Feedback-Aktuator (4) zusammen in einem Gehäuse (16) angeordnet sind.

8. Lenksystem (1) nach einem der vorhergehenden Ansprüche, **dadurch gekennzeichnet, dass** ein spulenloser Körper (25,26) magnetisiert oder teilmagnetisiert ist.

9. Lenksystem (1) nach einem der vorhergehenden Ansprüche, **dadurch gekennzeichnet, dass** die Haltebremse (13) einen in Anlage mit der Lenkwelle (2) stehenden Haltering (24), einen Innenring (25), der mittels der Halterings (24) mit der Lenkwelle (2) drehfest verbunden ist und einen Außenring (26) aufweist, der den Innenring (25) umfänglich umgibt und der mit dem Gehäuse (16) verbunden ist.

10. Lenksystem (1) nach Anspruch 9, **dadurch gekennzeichnet, dass** der Außenring (26) oder der Innenring (25) einen im Querschnitt U-förmigen Eisenring aufweist, der in einer Ringnut (27) eine Spule (28) aufgenommen hat, die bestrombar ist.

11. Lenksystem (1) nach einem der vorhergehenden Ansprüche, **dadurch gekennzeichnet, dass** die Haltebremse (13) einen im Querschnitt U-förmigen Innenring (251) mit außenumfänglicher und innenumfänglicher Verzahnung (36,37) aufweist, wobei zwischen den Schenkeln des Innenringes (251) eine bestrombare Spule (28) in einer Ringnut (27) aufgenommen ist und wobei die Haltebremse (13) einen im Querschnitt U-förmigen Außenring (261) mit Verzahnung (38,39) auf den Innenseiten beider Schenkel aufweist, so dass der Innenring (251) zwischen den beiden Schenkeln des Außenringes (261) aufgenommen ist und zwei Luftspalte (40,41) zur Minimierung des magnetischen Widerstandes zur Verfügung stehen.

12. Lenksystem (1) nach Anspruch 11, **dadurch gekennzeichnet, dass** der bestrombare Innenring (254) entweder mit dem Gehäuse (16) verbunden ist, wobei der Außenring (264) an der Lenkwelle (2) befestigt ist, oder dass der bestrombare Innenring (255) mit der Außenseite der Lenkwelle (2) verbunden ist, wobei der Außenring (265) an dem Gehäuse (16) befestigt ist.

13. Lenksystem (1) nach einem der vorhergehenden Ansprüche 3 bis 12, **dadurch gekennzeichnet, dass** eine Steuereinheit (7), welche eingerichtet ist, die Spule oder Spulen (28) zu bestromen, eine Einrichtung zur Entmagnetisierung der Haltebremse (13) aufweist, die eine Vollbrückenschaltung umfasst.

14. Lenksystem (1) nach einem der vorhergehenden Ansprüche, **dadurch gekennzeichnet, dass** das Lenkgetriebe (11) und das Eingabemittel (3) als Steer-by-wire-System mechanisch nicht gekoppelt sind.

15. Feedback-Aktuator für ein Lenksystem nach einem der vorhergehenden Ansprüche, wobei der Feedback-Aktuator und eine als Reluktanzbremse ausgebildete Haltebremse eine Lenkwelle umgebend in einem Gehäuse angeordnet sind.

## Claims

1. Steering system (1) for motor vehicles, comprising a steering actuator (9) which acts on the steered wheels (10), is electronically controlled in accordance to a driver's steering request and acts on the steered wheels (10) by means of a steering gear (11), an actuator device which transmits reactions to a steering shaft (2) which is connected to the steering wheel (3), and an electrically activatable holding brake (13) **characterized in that** the holding brake (13) can be switched between an open position and a holding position, wherein the holding brake (13) is designed to block rotation of the steering shaft (2) in the holding position when a predefined rotational angle of the steering shaft (2) with respect to a housing coupled to the motor vehicle is exceeded, and to release rotation of the steering shaft (2) with respect to the housing in the open position, the holding brake (13) being a reluctance brake.

2. Steering system (1) according to claim 1, **characterized in that** the holding brake (13) is embodied in such a way that when the holding brake (13) is energized it assumes a holding position by minimization of a magnetic resistance between a first element (263,25,26), which is rotatably connected to the steering shaft (2), and a second element (253,25,26), which is fixedly connected to a housing.

3. Steering system (1) as claimed in claims 1 or claim 2, **characterized in that** the holding brake (13) comprises one or more coils (28) which is/are energized in a single phase.

4. Steering system (1) as claimed in claim 3, **characterized in that** the energization of the coil/coils (28) can be controlled.

5. Steering system (1) as claimed in one of the preceding claims, **characterized in that** the holding brake (13) has precisely one pair of faces or a multiplicity of pairs of faces with profiling (31,32 - 310,320 - 311,321 312,322).

6. Steering system (1) as claimed in claim 5, **characterized in that** the pair or pairs of faces with profiling (31,32 - 310,320 - 311,321 312,322) extend horizontally and/or perpendicularly and/or obliquely with respect to the rotational axis (200) of the holding brake (13).

7. Steering system (1) as claimed in one of the preceding claims, **characterized in that** the holding brake (13) and a feed actuator (4) are arranged together in a housing (16).

8. Steering system (1) as claimed in one of the preceding claims, **characterized in that** a body (25,26) without a coil is magnetized or partially magnetized.

9. Steering system (1) as claimed in one of the preceding claims, **characterized in that** the holding brake (13) has a holding ring (24) which abuts against the steering shaft (2), an inner ring (25) which is connected in a rotationally fixed fashion to the steering shaft (2) by means of the holding ring (24), and an outer ring (26) which surrounds the inner ring (25) circumferentially and which is connected to the housing (16).

10. Steering system (1) as claimed in claim 9, **characterized in that** the outer ring (26) or the inner ring (25) has an iron ring which is U-shaped in cross section and has received a coil (28), which can be energized, in an annular groove (27).

11. Steering system (1) as claimed in one of the preceding claims, **characterized in that** the holding brake (13) has an inner ring (251) with a U-shaped cross section and with an outer-circumferential and inner-circumferential toothing arrangement (36,37), wherein a coil (28) which can be energized is received in an annular groove (27) between the limbs of the inner ring (251), and wherein the holding brake (13) has an outer ring (261) which has a U-shaped cross section and a toothing arrangement (38,39) on the inner sides of both limbs, so that the inner ring (251) is received between the two limbs of the outer ring (261), and two air gaps (40,41) are available for minimizing the magnetic resistance.

12. Steering system (1) as claimed in claim 11, characterized either in that the inner ring (254) which can be energized is connected to the housing (16), wherein the outer ring (264) is attached to the steering shaft (2), or in that the inner ring (255) which can be energized is connected to the outer side of the steering shaft (2), wherein the outer ring (265) is attached to the housing (16).

13. Steering system (1) as claimed in one of the preceding claims 3 to 12, **characterized in that** a control unit (7) which is configured to energize the coil or coils (28) has a device for demagnetizing the holding brake (13) which comprises a full-bridge circuit.

14. Steering system as claimed in one of the preceding claims, **characterized in that** the steering gear and the input means are, as a steer-by-wire system, not mechanically coupled.

15. Feedback actuator for a steering system as claimed in one of the preceding claims, wherein the feedback actuator and a holding brake designed as a reluctance brake are arranged in a housing surrounding a steering shaft.

## Revendications

1. Système de direction (1) pour véhicules automobiles comprenant un régulateur de direction (9) agissant sur les roues dirigées (10), réglé électroniquement en fonction d'un souhait de direction du conducteur, qui agit sur les roues dirigées (10) au moyen d'un mécanisme de direction (11), un dispositif d'actionneur transmettant des rétroactions à un arbre de direction (2) relié au volant de direction (3) et un frein de retenue (13) activable électriquement, **caractérisé en ce que** le frein de retenue (13) est commutable entre une position ouverte et une position de retenue, le frein de retenue (13) étant configuré pour bloquer une rotation de l'arbre de direction (2) dans la position de retenue lors d'un dépassement d'un angle de rotation prédéfini de l'arbre de direction (2) par rapport à un boîtier couplé au véhicule automobile et pour libérer une rotation de l'arbre de direction (2) par rapport au boîtier dans la position ouverte, le frein de retenue (13) étant un frein à réluctance.

2. Système de direction (1) selon la revendication 1, **caractérisé en ce que** le frein de retenue (13) est configuré de telle sorte que lors d'une mise sous tension du frein de retenue (13), celui-ci occupe une position de retenue par minimisation d'une résistance magnétique entre un premier élément (263, 25, 26) relié de manière rotative à l'arbre de direction (2) et un deuxième élément (253, 25, 26) relié de manière fixe à un boîtier.

3. Système de direction (1) selon la revendication 1 ou la revendication 2, **caractérisé en ce que** le frein de retenue (13) comprend une ou plusieurs bobines (28) qui sont mises sous tension monophasée.

4. Système de direction (1) selon la revendication 3, **caractérisé en ce que** la mise sous tension de la ou des bobines (28) est réglable.

5. Système de direction (1) selon l'une quelconque des revendications précédentes, **caractérisé en ce que** le frein de retenue (13) présente exactement une ou une pluralité de paires de surfaces ayant un profilage (31, 32 - 310, 320 - 311, 321 312, 322).

6. Système de direction (1) selon la revendication 5, **caractérisé en ce que** la ou les paires de surfaces ayant un profilage (31, 32 - 310, 320 - 311, 321 312, 322) s'étendent horizontalement et/ou verticalement et/ou obliquement par rapport à l'axe de rotation (200) du frein de retenue (13).

7. Système de direction (1) selon l'une quelconque des revendications précédentes, **caractérisé en ce que** le frein de retenue (13) et un actionneur à rétroaction (4) sont agencés ensemble dans un boîtier (16).

8. Système de direction (1) selon l'une quelconque des revendications précédentes, **caractérisé en ce qu'**un corps sans bobine (25, 26) est magnétisé ou partiellement magnétisé.

9. Système de direction (1) selon l'une quelconque des revendications précédentes, **caractérisé en ce que** le frein de retenue (13) présente une bague de retenue (24) se trouvant en application contre l'arbre de direction (2), une bague intérieure (25) qui est reliée à l'arbre de direction (2) de manière immobile en rotation au moyen de la bague de retenue (24), et une bague extérieure (26) qui entoure la bague intérieure (25) sur sa circonférence et qui est reliée au boîtier (16).

10. Système de direction (1) selon la revendication 9, **caractérisé en ce que** la bague extérieure (26) ou la bague intérieure (25) présente une bague en fer de section transversale en forme de U, qui a reçu dans une rainure annulaire (27) une bobine (28) qui peut être mise sous tension.

11. Système de direction (1) selon l'une quelconque des revendications précédentes, **caractérisé en ce que** le frein de retenue (13) présente une bague intérieure (251) de section transversale en forme de U ayant une denture (36, 37) sur la circonférence extérieure et sur la circonférence intérieure, une bobine (28) pouvant être mise sous tension étant reçue entre les branches de la bague intérieure (251) dans une rainure annulaire (27) et le frein de retenue (13) présentant une bague extérieure (261) de section transversale en forme de U ayant une denture (38, 39) sur les côtés intérieurs des deux branches, de telle sorte que la bague intérieure (251) est reçue entre les deux branches de la bague extérieure (261) et deux espaces d'air (40, 41) sont disponibles pour minimiser la résistance magnétique.

12. Système de direction (1) selon la revendication 11, **caractérisé en ce que** la bague intérieure pouvant être mise sous tension (254) est reliée au boitier (16), la bague extérieure (264) étant fixée à l'arbre de direction (2), ou **en ce que** la bague intérieure pouvant être mise sous tension (255) est reliée au côté extérieur de l'arbre de direction (2), la bague extérieure (265) étant fixée au boîtier (16).

13. Système de direction (1) selon l'une quelconque des revendications 3 à 12 précédentes, **caractérisé en ce qu'**une unité de commande (7), qui est adaptée pour mettre sous tension la bobine ou les bobines (28), présente un dispositif de démagnétisation du frein de retenue (13), qui comprend un circuit à pont complet.

14. Système de direction (1) selon l'une quelconque des revendications précédentes, **caractérisé en ce que** le mécanisme de direction (11) et le moyen d'entrée (3) ne sont pas mécaniquement couplés en tant que direction à commande électrique.

15. Actionneur à rétroaction pour un système de direction selon l'une quelconque des revendications précédentes, l'actionneur à rétroaction et un frein de retenue configuré sous forme de frein à réluctance étant agencés dans un boîtier en entourant un arbre de direction.
